# EUROPEAN PATENT APPLICATION

(11) **EP 3 013 075 A1**
(43) Date of publication of application: **27.04.2016**
(21) Application number: 15190657.5
(22) Date of filing: 20.10.2015
(51) Int. Cl.: H04W 4/00, H04W 88/06

(54) **RADIO REPEATER FOR AUTOMATIC CONSUMPTION METERING SYSTEMS**

(30) Priority: 20.10.2014 IT MO20140294
(71) Applicant: Sinapsi S.r.l., 06083 Bastia Umbra (PG) (IT)
(72) Inventor: Valerii, Massimo, 06083 Bastia Umbra (PG) (IT)
(74) Representative: Grana, Daniele

(57) **Abstract**

A radio repeater (1) for automatic consumption metering systems, comprising a first antenna (5) for the transmission/reception of radio frequency signals, a first transceiver unit (6) connected to the first antenna (5) for the management of radio communications with at least a consumption metering device (3) located inside an area/building (E), a second antenna (7), a second transceiver unit (8) connected to the second antenna (7) for the management of communications with a data collecting unit (4) of the data coming from the metering device (3), and a processing unit (9) operatively connected to the first transceiver unit (6) and to the second transceiver unit (8) and having: first management means (10) of communications with saithed first transceiver unit (6) according to a Wireless M-BUS protocol; second management means (11) of communications with the second transceiver unit (8) according to a communication protocol for WLAN type networks.

## Description

The present invention relates to a radio repeater for automatic consumption metering systems.

With reference to advanced automatic consumption metering systems (smart metering or Advanced Metering Infrastructure systems), the use is known and widespread of the Wireless M-Bus standard, which defines the radiofrequency link procedures between data collection devices relating to water, gas, heat and electricity consumption.

More specifically, the Wireless M-Bus standard has been designed for communications within the 868 MHz band (later expanded to 169MHz and 433MHz) and defines the communication standards between a plurality of data collection devices, e.g., installed in correspondence of respective radiators inside a building to measure heat consumption, suitable for periodically sending information relating to the actual consumption to a common data collecting unit. It is further known that the OMS (Open Metering System) is an open communication standard for consumption metering devices, based on the European/international standards defined by the Wireless M-Bus and created with the purpose of providing precise rules for the standardization and certification of devices and data collecting systems in general.

The OMS standard, however, imposes limitations that, in many cases, negatively affect the performance of the data collecting systems.

In particular, the OMS standard does not permit the simultaneous use of several repeaters interposed between a metering device and the data collecting unit, preventing, in point of fact, multi-hop communications between the metering device and the collecting unit.

In order to overcome this drawback (while meeting the stringent OMS requirements) the use is known of time-shifting techniques according to which, in the case of using several repeaters, each repeater is only active within a respective time window.

Therefore, within this time window, the repeater collects data from the metering devices located in the vicinity (e.g., on a same floor of a building) and stores them, before subsequently transmitting them to another repeater active during a subsequent time window.

However, this way, while avoiding multi-hop communications, the communication is considerably slowed down between the metering devices and the data collecting unit.

In fact, the use of a sequence of different time windows inevitably entails a delay that is directly proportionate to the distance of the metering device from the data collecting unit and which is equal to the sum of the time windows. Consider, for example, a heat consumption meter installed on the top floor of a building that needs to communicate with a data collecting unit stationed on the ground floor or in the basement of the building itself.

In such a case, e.g., a repeater may be present on each floor and the delay is equal to the sum of all the working time windows of each repeater. Consequently, the data collected by the metering device on the top floor can even reach the collecting unit after several hours.

Alternatively to the use of such time-shifting techniques, the manufacturers of consumption metering systems and devices have developed proprietary devices which, using proprietary and closed protocols, permit the simultaneous use of several repeaters.

Such protocols however are, as said, closed, thus making mandatory the use of exclusive proprietary devices for the realization of the entire system.

The main aim of the present invention is to provide a radio repeater for automatic consumption metering systems which permits effective and rapid communication between consumption metering devices and a respective data collecting unit, while always complying with the communication standards defined at European/international level.

Another object of the present invention is to provide a radio repeater for automatic consumption metering systems which permits to overcome the mentioned drawbacks of the prior art within the ambit of a simple, rational, easy, effective to use and affordable solution.

The objects stated above are achieved by the present radio repeater for automatic consumption metering systems according to the characteristics disclosed in claim 1.

Other characteristics and advantages of the present invention will become better evident from the description of a preferred but not exclusive embodiment of a radio repeater for automatic consumption metering systems, illustrated by way of an indicative, but non-limiting, example in the accompanying drawings, in which:
Figure 1 is a general diagram that illustrates the use of a plurality of radio repeaters according to the invention in a heat consumption metering system installed inside a building;
Figure 2 is a schematic front view of the radio repeater according to the invention;
Figure 3 is a general block diagram that illustrates the processing means of the radio repeater according to the invention.

With particular reference to such figures, reference number 1 globally designates a radio repeater usable in automatic consumption metering systems.

It is particularly pointed out that the repeater 1 according to the invention is usable in advanced automatic consumption metering systems (such as smart metering or Advanced Metering Infrastructure systems), implemented according to the Wireless M-Bus communication standards.

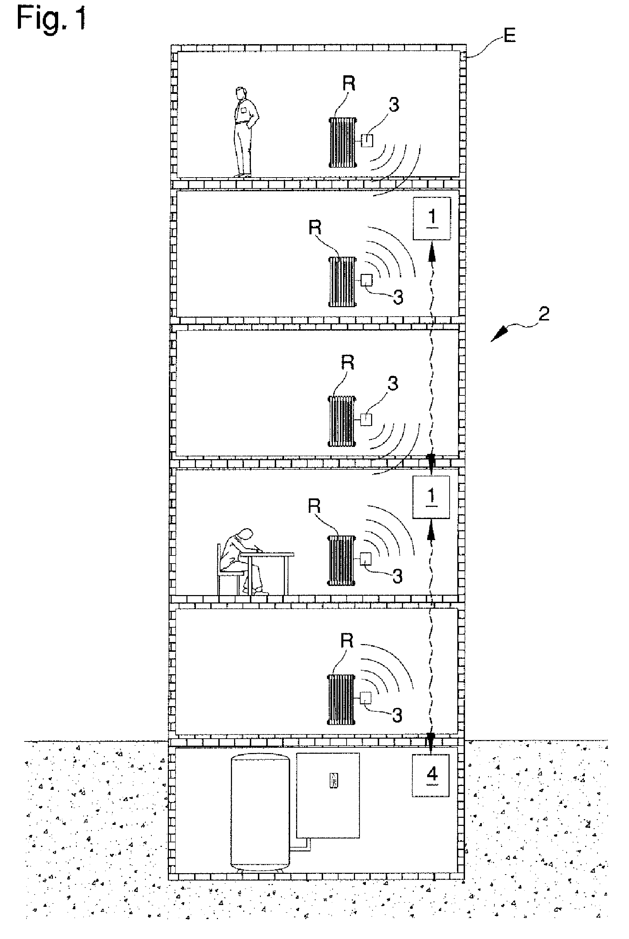

More specifically, in a preferred embodiment, the repeater 1 is made according to the standards defined by the OMS (Open Metering System). The implementation cannot however be ruled out of the repeater 1 according to Wireless M-BUS standards different from those defined by the OMS guidelines. By way of example only, figure 1 schematically shows a possible use of the repeater 1 in a smart metering system 2 installed inside a building E and used to meter the heat consumption of the radiators R inside different apartments.

With reference to this example, in particular, the system 2 comprises two repeaters 1 installed on different floors of the building E and able to communicate with a plurality of metering devices 3 associated with respective radiators R and able to detect heat consumption.

In particular, each of the metering devices 3 has a respective transmitter able to operate according to the communication procedures defined by the Wireless M-Bus standard and, specifically, by the OMS guidelines.

A collecting unit 4 installed on a floor of the building E (e.g. inside the basement) is able to communicate with the repeaters 1 and to collect the data from the metering devices 3.

Alternative embodiments of the system 2 cannot however be ruled out wherein, e.g., the collecting unit 4 is composed of a further repeater 1 having and/or connectable to suitable storage means of the collected data.

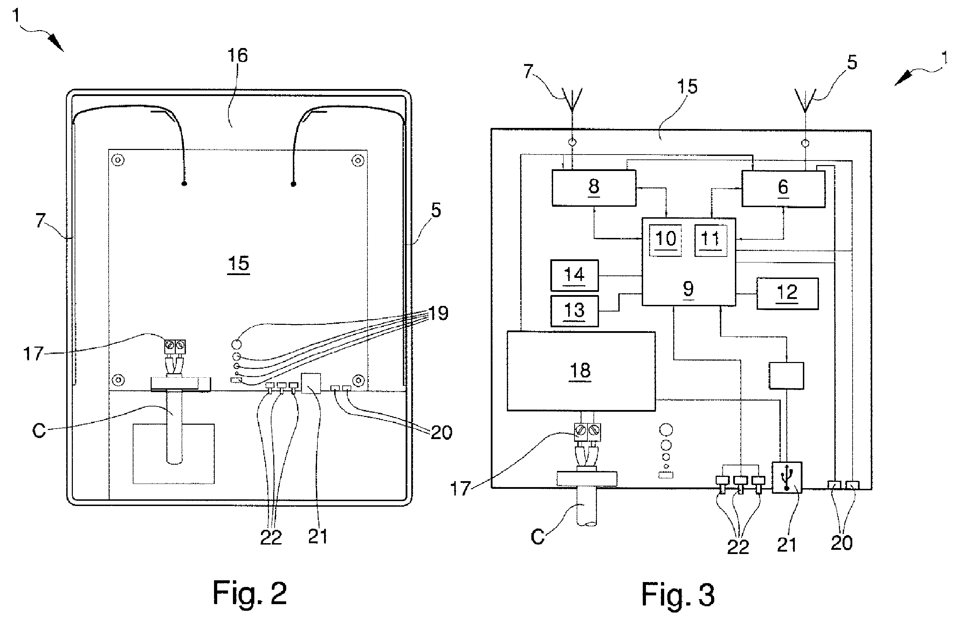

The repeater 1 according to the invention, schematically illustrated in figures 2 and 3, comprises a first antenna 5 for the transmission/reception of radio frequency signals and a first transceiver unit 6 connected to the first antenna 5 for the management of radio communications to/from consumption metering devices 3 located inside an area or a building.

In particular, the communication via the first transceiver unit 6 and the metering devices 3 occurs in the way defined by the Wireless M-Bus standard.

Advantageously, the repeater 1 comprises a second antenna 7 and a second transceiver unit 8 connected to the second antenna 7 for the management of communications with the data collecting unit 4 of the data coming from the metering devices 3.

In particular, the communication via the second transceiver unit 6 and the data collecting unit 4 occurs according to the procedures and protocols required for WLAN (Wireless Local Area Network) communications.

Preferably, the connection network between one or more repeaters 1 and the data collecting unit 4 is of the type of a Wireless Mesh Network.

This way, the network of repeaters 1 is composed of a cooperative wireless network wherein each of the nodes is composed of one of the repeaters 1 (which therefore acts as a receiver, transmitter and repeater).

Preferably, the first antenna 5 and the second antenna 7 operate at a predefined transmission/reception frequency of 868 MHz.

Advantageously, the repeater 1 comprises one processing unit 9 operatively connected to the first transceiver unit 6 and to the second transceiver unit 8 and having:
- first management means 10 able to manage the communications with the first transceiver unit 6 according to a Wireless M-BUS protocol;
- second management means 11 able to manage the communications with the second transceiver unit 8 according to a communication protocol for Wireless Mesh Networks.

This way, therefore, the processing unit 9 is able to receive via the first transceiver unit 6 data packets coming from the Wireless M-BUS type network, and therefore from the metering devices 3, to send them again via the second transceiver unit 8 towards the collecting unit 3, through the backbone made up of the mesh-type network.

In a totally similar way, furthermore, the processing unit 9 is able to receive via the second transceiver unit 8 the data packets coming from the collecting unit 3, through the backbone made up of the mesh-type network, to send them again towards the metering devices 3, through the Wireless M-BUS type network.

Preferably, the processing unit 9 is composed of a microcontroller.

The repeater 1 also comprises one or more internal memory units 12 and 13 operatively connected to the processing unit 9.

Preferably, these memory units are composed of a storage memory 12, of the type of an EEPROM or the like, and of a RAM memory 13.

Usefully, the presence of an RTC unit (Real Time Clock), connected to the processing unit 9 and shown in figure 3 with reference number 14, allows "labelling" the received data with the corresponding reception time instant. Usefully, the repeater 1 comprises a printed circuit board 15 comprising the first transceiver unit 6, the second transceiver unit 8, the processing unit 9, the memory units 12 and 13 and generally all the electronics of the repeater itself. The repeater 1 also comprises an external container 16, e.g. fixable to the wall, having an inner housing of the printed circuit board 15.

Usefully, the first antenna 5 and the second antenna 7 are fixed to the container 15 suitably spaced apart from one another.

Referring to another possible embodiment of the repeater 1, shown in figures 2 and 3, the first antenna 5 and the second antenna 7 can be the type of adhesive antennas applied along opposite side portions of the container 16.

A different fixing and/or positioning of the antennas 5 and 7 cannot however be ruled out.

Usefully, the first antenna 5 and the second antenna 7 can be positioned along respective side portions of the container 16 supported by respective support elements, made up e.g. of special turrets made projecting from the container itself.

If necessary, the repeater 1 may have an antenna at 169 MHz, which is not shown in the illustrations, anchorable to a respective portion of the container 16. The use cannot be ruled out furthermore of high-gain antennas suitably fixed on the outside plastic of the container 16.

Furthermore, the repeater 1 comprises electrical connection means 17, 18 connectable to a power supply line at 110-230 Vac.

In particular, such electrical connection means 17, 18 comprise a connector 17 connectable to a power supply cable C and a power supply stage 19 connected to the connector 17 and suitably connected to the first and second transceiver units 6 and 8.

Usefully, the possibility of supplying the repeater 1 using the conventional power supply line, e.g. at 230 Vac, allows having greater power, and therefore a higher flow rate than the flow rate of the repeating devices conventionally used in the field of smart metering.

The repeater 1 can also comprise visual signaling means 19, 20 of the quality of the received signal and/or of the signal transmission/reception activity by means of the first and second transceiver units 6 and 8.

In particular, with reference to the possible embodiment shown in figures 2 and 3, the visual signaling means 19, 20 comprise a series of LEDs 19 able to indicate the presence of the power supply and the quality of the received signal, and a series of LEDs 20 able to indicate the radio activity in transmission and in reception of the first and second transceiver units 6 and 8.

Usefully, the repeater 1 may comprise a USB connector 21, connectable e.g. to a personal computer or to a dedicated mobile device to allow the configuration of the repeater itself.

Usefully, the USB connector 21 may be used to power the repeater 1 itself.

For example, the power supply of the repeater 1 can be provided through the USB connector 21 during commissioning, in order to allow the configuration of the repeater itself before installation and connection to the power supply line. The use cannot however be ruled out of the USB connector 21 to supply power to the repeater 1 also during the normal operation of the repeater itself, as an alternative to connection to the 110-230 Vac power supply line.

If necessary, furthermore, the USB connector 21 can also be used for reading data stored inside the repeater 1, e.g., for reading the last useful datum received from the metering devices 3 and stored inside the repeater itself.

The repeater 1 may also comprise a plurality of selection buttons 22. These selection buttons 21 can be used, e.g., for commissioning or restarting the device.

The operation of the repeater 1 is described below.

Each repeater 1 of the smart metering system 2 is able to receive the information sent from the metering devices 3 located in the proximity of the repeater itself inside an area or a building.

In particular, the processing unit 9 of each repeater 1 is able to receive via the first transceiver unit 6 the data packets sent by the metering devices 3 according to the Wireless M-BUS communication standards.

The packets thus received are then suitably re-processed by the processing unit 9 and subsequently sent again via the second transceiver unit 8 towards the collecting unit 3, through the backbone network made up of the mesh type network.

During such communication along the backbone, the signal is propagated from a repeater 1 to the other as far as reaching the collecting unit 3 which, substantially, acts as a mesh network concentrator.

In the very same way, furthermore, the processing unit 9 of each repeater 1 is able to receive, via the second transceiver unit 8, the data packets coming from the collecting unit 3, through the backbone made up of the mesh type network, to send them again towards the respective metering devices 3 through the Wireless M-BUS type network.

It has in practice been ascertained how the described invention achieves the intended objects.

In particular, the fact is underlined that the radio repeater according to the invention allows effective and quick communication between consumption metering devices and a respective data collecting unit, while complying with the communication standards defined at European/international level.

## Claims

1. Radio repeater (1) for automatic consumption metering systems, comprising at least a first antenna (5) for the transmission/reception of radio frequency signals, at least a first transceiver unit (6) connected to said first antenna (5) for the management of radio communications with at least a consumption metering device (3) located inside an area/building (E), **characterized by** the fact that it comprises at least a second antenna (7), at least a second transceiver unit (8) connected to said second antenna (7) for the management of communications with at least a data collecting unit (4) of the data coming from said at least a metering device (3), and at least a processing unit (9) operatively connected to said first transceiver unit (6) and to said second transceiver unit (8) and having:
- first management means (10) of communications with said first transceiver unit (6) according to a Wireless M-BUS protocol;
- second management means (11) of communications with said second transceiver unit (8) according to a communication protocol for WLAN type networks.

2. Repeater (1) according to claim 1, **characterized by** the fact that said communication protocol for WLAN networks is constituted by a protocol for Wireless Mesh Networks.

3. Repeater (1) according to one or more of the preceding claims, **characterized by** the fact that it comprises at least an internal memory unit (12, 13) operatively connected to said processing unit (9).

4. Repeater (1) according to one or more of the preceding claims, **characterized by** the fact that it comprises at least a printed circuit board (15) having at least one of said first transceiver unit (6), said second transceiver unit (8), said processing unit (9), said internal memory unit (12, 13).

5. Repeater (1) according to one or more of the preceding claims, **characterized by** the fact that it comprises at least an external container (16), said first antenna (5) and said second antenna (7) being associated with said container (16) substantially spaced apart from one another.

6. Repeater (1) according to claim 5, **characterized by** the fact that at least one of said first antenna (5) and said second antenna (7) is the type of an adhesive antenna applied at a portion of the external surface of said container (16).

7. Repeater (1) according to one or more of claims 5 and 6, **characterized by** the fact that at least one of said first antenna (5) and said second antenna (7) is associated with said container (16) by interposition of at least a supporting element.

8. Repeater (1) according to one or more of the preceding claims, **characterized by** the fact that said first antenna (5) and said second antenna (7) operate at a predefined transmission/reception frequency equal to 868 MHz.

9. Repeater (1) according to one or more of the preceding claims, **characterized by** the fact that said first antenna (5) and said second antenna (7) operate at a predefined transmission/reception frequency equal to 169MHz.

10. Repeater (1) according to one or more of the preceding claims, **characterized by** the fact that it comprises electrical connection means (17, 18) connectable to an external power supply line.

11. Repeater (1) according to one or more of the preceding claims, **characterized by** the fact that it comprises visual signaling means (19, 20) of the quality of the received signal and/or of the signal transmission/reception activity by means of said first and second transceiver units (6, 8).

12. System (2) for automatic consumption metering, comprising a plurality of metering devices (3) of consumption located inside an area/building (E) and operating according to the communication modes defined by the Wireless M-Bus standard, and at least a data collecting unit (4) of the data coming from said metering devices (3), **characterized by** the fact that it comprises at least a repeater (1) according to one or more of the preceding claims able to allow the communications between said data collecting unit (4) and said metering devices (3).
